# DEMANDE DE BREVET EUROPEEN

(11) **EP 4 346 293 A2**
(43) Date de publication de la demande: **03.04.2024**
(21) Numéro de dépôt: 23199450.0
(22) Date de dépôt: 25.09.2023
(51) Int. Cl.: H04W 52/02, E06B 9/68, H04N 21/41, G08C 17/02

(54) **PROCEDE D'ACTIVATION ET DE DESACTIVATION D'UN MODE DE VEILLE D'UN MOTEUR**

(30) Priorité: 29.09.2022 FR 2209875
(71) Demandeur: Delta Dore, 35270 Bonnemain (FR)
(72) Inventeur: ROUTIER, Frédéric, 35270 BONNEMAIN (FR); PERRAUD, Xavier, 35270 BONNEMAIN (FR)
(74) Mandataire: Cabinet Le Guen Maillet

(57) **Abrégé**

Procédé d'activation et de désactivation d'un mode veille d'un contrôleur configuré pour recevoir des instructions en provenance d'un dispositif de pilotage, le contrôleur fonctionnant dans deux modes de communication dits mode standard et mode veille, pouvant être activés alternativement, chaque mode effectuant une détection périodique de réception d'instructions, le contrôleur restant au repos entre deux détections, la périodicité de détection du mode standard étant inférieure à la périodicité de détection du mode veille.

Le procédé comporte d'activer (300) le mode standard lors d'une initialisation du contrôleur ; d'activer le mode veille si le contrôleur est associé à au moins un dispositif de pilotage et lorsqu'aucune instruction n'est reçue pendant une durée prédéfinie (308) et qu'un nombre d'instructions reçues après un enregistrement de positions extrêmes est inférieur à un nombre prédéfini ; et de réactiver le mode standard si une instruction de sortie du mode veille est reçue lorsque le mode veille est activé.

## Description

### DOMAINE TECHNIQUE

La présente invention concerne le domaine des dispositifs d'obturation motorisés et concerne plus particulièrement l'activation et la désactivation d'un mode de veille.

### ETAT DE LA TECHNIQUE ANTERIEURE

Un dispositif d'obturation, tel qu'un volet roulant, est mis en mouvement grâce à un moteur et un contrôleur d'un tel moteur. Le moteur et le contrôleur nécessitent d'être alimentés électriquement pour effectuer une telle mise en mouvement. L'alimentation électrique du moteur et du contrôleur grâce à des énergies renouvelables se développe. Par exemple le moteur et le contrôleur peuvent être alimentés par des éléments photovoltaïques ou par une batterie chargée par les éléments photovoltaïques.

Pour garantir un usage effectif du moteur dès l'installation du dispositif d'obturation, la batterie est chargée préalablement à l'installation du dispositif d'obturation, lors de l'assemblage du moteur et du contrôleur à la batterie, de la batterie aux éléments photovoltaïques et du moteur et du contrôleur à un élément occultant.

Toutefois, une phase de stockage et/ou de transport qui a lieu entre l'assemblage du moteur et du contrôleur à la batterie et à l'élément occultant et l'installation du dispositif d'obturation peut avoir des durées variables selon des facteurs divers liés à des contraintes logistiques par exemple. Il arrive alors que la durée de la phase de stockage et/ou de transport soit suffisamment longue pour que la batterie se décharge, ce qui entraîne une impossibilité pour un utilisateur de faire fonctionner le moteur, et donc le dispositif d'obturation, dès l'installation. Il en résulte une impossibilité de vérifier le bon fonctionnement du dispositif d'obturation d'une part. D'autre part, un délai de recharge de la batterie est nécessaire pour que le dispositif d'obturation puisse à nouveau fonctionner.

Il est alors souhaitable de pallier ces inconvénients de l'état de la technique.

Il est notamment souhaitable de fournir une solution qui permette de réduire la consommation de la batterie entre l'assemblage du moteur et du contrôleur à la batterie et l'installation du dispositif d'obturation tout en permettant un fonctionnement aisé et réactif du dispositif d'obturation dès son installation. Il est en particulier souhaitable de fournir une solution simple et automatique, qui limite le nombre d'étapes supplémentaires lors de l'assemblage du moteur et du contrôleur à la batterie.

### EXPOSE DE L'INVENTION

Un objet de la présente invention est de proposer un procédé d'activation et de désactivation d'un mode veille d'un contrôleur, le moteur étant destiné à entraîner en montée et en descente un élément occultant, le contrôleur étant configuré pour recevoir des instructions en provenance d'un dispositif de pilotage et pour appliquer des commandes au moteur. Le contrôleur comporte une interface radio fonctionnant dans deux modes de communication, dits mode standard et mode veille, pouvant être activés alternativement. Le contrôleur commande à l'interface radio, pour chaque mode de communication, une détection périodique de réception d'instructions, le contrôleur et l'interface radio restent au repos entre deux détections lorsqu'aucune instruction n'est reçue. La périodicité de détection du mode standard est inférieure à la périodicité de détection du mode veille. Le procédé est implémenté par le contrôleur et comporte les étapes de : activer le mode standard lors d'une initialisation du contrôleur ; activer le mode veille si le contrôleur est associé à au moins un dispositif de pilotage et lorsqu'aucune instruction n'est reçue pendant une durée prédéfinie et qu'un nombre d'instructions reçues après un enregistrement de positions extrêmes de l'élément occultant est inférieur à un nombre prédéfini ; et réactiver le mode standard si une instruction de sortie du mode veille est reçue lorsque le mode veille est activé.

Ainsi, l'implémentation d'un mode veille permet de réduire la consommation de la batterie et l'activation du mode veille se fait automatiquement lorsqu'aucune instruction n'est reçue pendant une durée prédéfinie. En outre, le mode veille peut être aisément désactivé afin d'augmenter la réactivité du contrôleur lors d'une installation.

Selon un mode de réalisation particulier, le procédé comporte en outre de réactiver le mode standard si le contrôleur est remis sous tension après une extinction lorsque le mode veille est activé.

Ainsi, il est possible de réactiver le mode standard lorsque le dispositif de pilotage est introuvable.

Selon un mode de réalisation particulier, le procédé comporte en outre de bloquer l'activation du mode veille si le mode standard est réactivé après l'activation du mode veille.

Selon un mode de réalisation particulier, le procédé comporte en outre de bloquer l'activation du mode veille lorsqu'un nombre d'instructions reçues après un enregistrement de positions extrêmes de l'élément occultant atteint le nombre prédéfini.

Ainsi, l'activation du mode veille est empêchée après une installation, ce qui permet d'éviter un dysfonctionnement à l'utilisation, par exemple lorsqu'une phase de stockage et/ou de livraison est inférieure à la durée prédéfinie.

Selon un mode de réalisation particulier, l'instruction de sortie du mode veille comporte une trame comportant un préambule suivi d'un champ de données, le préambule étant d'une durée supérieure à la durée prédéfinie.

L'invention concerne également un procédé d'arrêt d'un mode veille, le procédé étant implémenté par un dispositif de pilotage configuré pour émettre des instructions à un contrôleur d'un moteur destiné à entraîner en montée et en descente un élément occultant, les instructions pouvant être des instructions d'un premier type et des instructions d'un second type, le préambule de chaque trame d'une instruction du premier type étant de durée inférieure au préambule de chaque trame d'une instruction du second type. Le procédé comporte : émettre une instruction du second type lorsque l'instruction est une instruction de sortie du mode de veille ; et émettre une instruction du premier type sinon.

L'invention concerne également un contrôleur d'un moteur destiné à entraîner en montée et en descente un élément occultant, le contrôleur étant configuré pour recevoir des instructions en provenance d'un dispositif de pilotage et pour appliquer des commandes au moteur, le contrôleur comportant une interface radio fonctionnant dans deux modes de communication, dits mode standard et mode veille, pouvant être activés alternativement, le contrôleur commandant à l'interface radio, pour chaque mode de communication, une détection périodique de réception d'instructions, le contrôleur et l'interface radio restant au repos entre deux détections lorsqu'aucune instruction n'est reçue. La périodicité de détection du mode standard est inférieure à la périodicité de détection du mode veille, et le contrôleur comporte des moyens pour : activer le mode standard lors d'une initialisation du contrôleur ; activer le mode veille si le contrôleur est associé à au moins un dispositif de pilotage et lorsqu'aucune instruction n'est reçue pendant une durée prédéfinie et qu'un nombre d'instructions reçues après un enregistrement de positions extrêmes de l'élément occultant est inférieur à un nombre prédéfini ; et réactiver le mode standard si une instruction de sortie du mode veille est reçue lorsque le mode veille est activé.

L'invention concerne également un système comportant un dispositif d'obturation et comportant un tel contrôleur dans l'un quelconque de ses modes de réalisation.

L'invention concerne également un dispositif de pilotage configuré pour émettre des instructions à un contrôleur d'un moteur destiné à entraîner en montée et en descente un élément occultant, le dispositif de pilotage comportant des moyens pour émettre des instructions d'un premier type et des instructions d'un second type, le préambule de chaque trame d'une instruction du premier type étant de durée inférieure au préambule de chaque trame d'une instruction du second type, le dispositif de pilotage comportant des moyens pour : émettre une instruction du second type lorsque l'instruction est une instruction de sortie du mode de veille ; et émettre une instruction du premier type sinon.

L'invention concerne également un programme d'ordinateur pouvant être stocké sur un support et/ou téléchargé d'un réseau de communication, afin d'être lu par un processeur. Ce programme d'ordinateur comprend des instructions pour implémenter le procédé mentionné ci-dessus dans l'un quelconque de ses modes de réalisation, lorsque ledit programme d'ordinateur est exécuté par le processeur.

L'invention concerne également un support de stockage d'informations stockant un tel programme d'ordinateur comprenant des instructions pour implémenter le procédé mentionné ci-dessus dans l'un quelconque de ses modes de réalisation lorsque ledit programme d'ordinateur est lu depuis ledit support de stockage et exécuté par le processeur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un dispositif d'obturation motorisé d'une baie comportant un moteur contrôlé par un contrôleur ;
[Fig. 2] illustre schématiquement un exemple d'architecture matérielle du contrôleur ;
[Fig. 3] illustre schématiquement des étapes d'un algorithme d'activation et de désactivation d'un mode veille du contrôleur ;
[Fig. 4] illustre schématiquement des étapes de l'algorithme d'activation et de désactivation du mode veille du contrôleur.

### EXPOSE DETAILLE DE MODES DE REALISATION

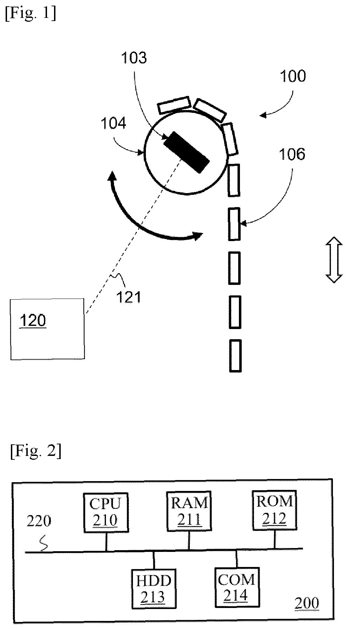

La Fig. 1 illustre ainsi schématiquement un dispositif d'obturation motorisé 100 d'une baie qui est destiné à venir s'installer dans un coffre de volet d'un bâtiment, ledit coffre de volet étant situé au-dessus de la baie à obturer. Le dispositif d'obturation motorisé 100 comprend un élément occultant 106 tel qu'un tablier, une toile ou un écran et des moyens d'entraînement constitués d'un moteur 103 et d'un tube d'enroulement 104, les moyens d'entraînement étant destinés à entraîner en montée et en descente l'élément occultant 106.

Le moteur 103 est par exemple coaxial avec le tube d'enroulement 104 et est disposé à l'intérieur dudit tube d'enroulement 104. La fixation de l'élément occultant 106 sur le tube d'enroulement 104 s'effectue à l'aide d'un dispositif de verrouillage souple ou rigide. Le tube d'enroulement 104 est entraîné en rotation par le moteur 103 et entraîne alors la montée ou la descente de l'élément occultant 106 selon que le sens de rotation du tube d'enroulement 104 génère l'enroulement ou le déroulement de l'élément occultant 106 autour du tube d'enroulement 104.

Généralement, l'élément occultant 106 est constitué de lames fixées les unes aux autres de manière à présenter un espace entre elles.

Le moteur 103 est contrôlé par un contrôleur 200 (représenté en Fig. 2) qui permet d'envoyer des commandes de rotation du moteur 103 dans un premier sens ou dans un deuxième sens opposé au premier, de sorte à entraîner la montée ou la descente de l'élément occultant106, et des commandes d'arrêt de la rotation du moteur 103. Le moteur 103 et le contrôleur 200 sont alimentés électriquement par une batterie.

Le contrôleur 200 reçoit des instructions en provenance d'un dispositif de pilotage 120 par le biais d'un lien de communication 121 d'un réseau de communication. Le dispositif de pilotage 120 est un émetteur tel qu'un boîtier dédié ou une télécommande, configuré pour émettre des instructions au contrôleur 200. L'émission d'une instruction résulte d'une action exécutée par un utilisateur. Le dispositif de pilotage 120 permet ainsi à l'utilisateur de générer l'émission d'instructions vers le contrôleur 200 du moteur 103. Par exemple, chaque instruction est associée à une touche ou une combinaison de touches prédéfinies sur lesquelles l'utilisateur appuie pour générer ladite instruction.

Le contrôleur 200 comporte une interface de communication 214 (représentée en Fig. 2), telle qu'une interface radio, fonctionnant alternativement dans deux modes de communication. Le contrôleur 200 peut activer alternativement chacun des deux modes de communication. Le contrôleur 200 commande à l'interface de communication 214, pour chaque mode de communication, une détection périodique de réception d'instructions. Dit autrement, dans chacun des deux modes de communication, le contrôleur 200 se met périodiquement à l'écoute de nouveaux messages afin de déterminer si une instruction est reçue. On entend par détection le fait de rendre opérante l'interface de communication 214 (représentée en Fig. 2) du contrôleur 200 afin de communiquer avec le dispositif de pilotage 120. Lors d'une détection de réception d'instructions, le contrôleur 200 et l'interface de communication sont en éveil. Le contrôleur 200 et l'interface de communication 214 restent au repos entre deux détections lorsqu'aucun message n'est reçu, ce qui permet d'économiser de l'énergie. On entend par repos le fait de mettre en sommeil l'interface de communication 214 et le contrôleur 200. La consommation électrique du contrôleur 200 au repos est ainsi réduite par rapport à la consommation électrique du contrôleur 200 lorsque le contrôleur est à l'écoute de nouveaux messages.

Lorsqu'un message est reçu, le contrôleur 200 maintient l'interface de communication 214 opérante jusqu'à réception complète dudit message puis repasse au repos.

La périodicité de détection, définie entre deux instants de détection successifs, varie selon le mode de communication activé. Selon un premier mode de communication, dit mode standard, la périodicité de détection est suffisamment courte pour permettre une réactivité élevée du contrôleur 200. Par exemple, la périodicité de détection du mode standard est de l'ordre de quelques dizaines de millisecondes. Selon un second mode de communication, dit mode veille, la périodicité de détection est plus longue, par exemple de l'ordre d'une seconde. Lorsque le contrôleur 200 active le mode veille, la réactivité du contrôleur 200 est donc plus faible mais la consommation d'énergie est réduite en raison de la périodicité de détection plus longue qu'en mode standard.

Ainsi, lorsque le dispositif d'obturation motorisé 100 est dans une phase de stockage et/ou de transport entre des phases d'assemblage et d'installation, l'activation du mode veille permet de réduire la consommation d'énergie et d'allonger la durée pendant laquelle la batterie reste chargée. Par exemple, lorsque le dispositif d'obturation est inutilisé, la batterie se décharge entre 2 et 4 mois si le mode standard est activé et se décharge après 6 mois lorsque le mode veille est activé.

La Fig. 2 illustre schématiquement un exemple d'architecture matérielle du contrôleur 200. Le contrôleur 200 comporte alors, reliés par un bus de communication 220 : un processeur ou CPU (« Central Processing Unit » en anglais) 210 ; une mémoire vive RAM (« Random Access Memory » en anglais) 211 ; une mémoire morte ROM (« Read Only Memory » en anglais) 212 ; une unité de stockage ou un lecteur de support de stockage, tel qu'un disque dur HDD (« Hard Disk Drive » en anglais) 213 ; et l'interface de communication 214 permettant communiquer avec le dispositif de pilotage 120 et permettant d'envoyer des commandes au moteur 103.

Le processeur 210 est capable d'exécuter des instructions chargées dans la RAM 211 à partir de la ROM 212, d'une mémoire externe (non représentée), d'un support de stockage, ou d'un réseau de communication. Lorsque le contrôleur 200 est mis sous tension, le processeur 210 est capable de lire de la RAM 211 des instructions et de les exécuter. Ces instructions forment un programme d'ordinateur causant l'implémentation, par le processeur 210, de tout ou partie des algorithmes et étapes décrits ci-après en relation avec le contrôleur 200.

Ainsi, tout ou partie des algorithmes et étapes décrits ci-après en relation avec le contrôleur 200 peut être implémenté sous forme logicielle par exécution d'un ensemble d'instructions par une machine programmable, telle qu'un DSP (« Digital Signal Processor » en anglais) ou un microcontrôleur, ou sous forme matérielle par une machine ou un composant dédié, tel qu'un FPGA (« Field-Programmable Gate Array » en anglais) ou un ASIC (« Application-Specific Integrated Circuit » en anglais).

Le dispositif de pilotage 120 comporte une architecture matérielle similaire à celle du contrôleur 200. L'interface de communication du dispositif de pilotage 120 permet de communiquer avec le contrôleur 200 et permet en outre de recevoir des ordres résultant d'actions effectuées par un utilisateur.

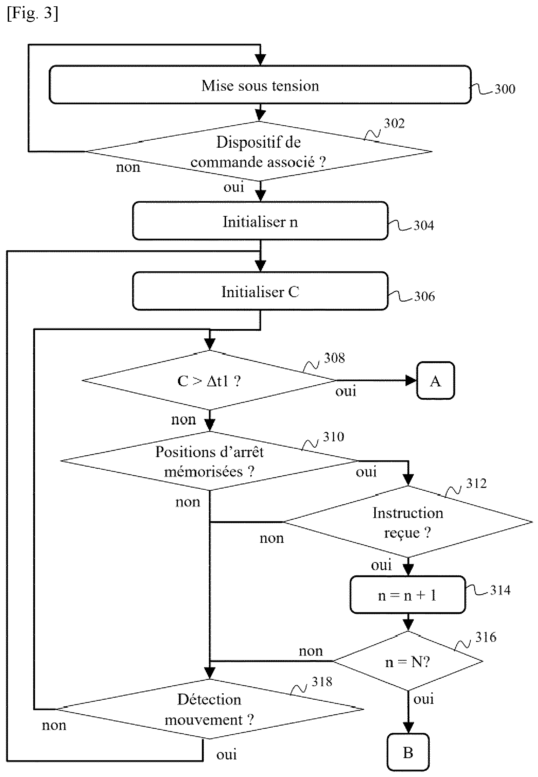

La Fig. 3 illustre schématiquement des étapes d'un algorithme d'activation et de désactivation du mode veille du contrôleur 200, implémenté par le contrôleur 200.

Dans une première étape 300, le mode standard est activé lors d'une initialisation du contrôleur 200. C'est le cas par exemple lorsque le contrôleur 200 est mis sous tension lors d'un branchement du contrôleur 200 à la batterie. Si le contrôleur 200 est déjà initialisé et si le mode standard est déjà activé, alors le mode standard reste activé.

Dans une étape 302 suivante, le contrôleur 200 détermine si au moins un dispositif de pilotage 120 est associé au contrôleur 200. Un dispositif de pilotage 120 est associé au contrôleur 200 lorsque le contrôleur 200 est capable d'identifier qu'une instruction reçue en provenance du dispositif de pilotage 120 lui est adressée. Si c'est le cas, une étape 304 est effectuée. Sinon, le contrôleur 200 retourne à l'étape 300.

A l'étape 304, le contrôleur 200 initialise une variable *n* à zéro. La variable *n* est utilisée pour compter un nombre d'instructions reçues par le contrôleur 200.

Dans une étape 306 suivante, le contrôleur 200 initialise un compteur de temps C à un instant initial, par exemple *t₀.* L'instant initial, lorsque l'étape 306 est réalisée pour la première fois par le contrôleur 200, correspond à un instant d'association entre le au moins un dispositif de pilotage 120 et le contrôleur 200. L'instant initial, lorsque l'étape 306 est réalisée après une étape 318, correspond à un instant d'un arrêt précédent du moteur 103.

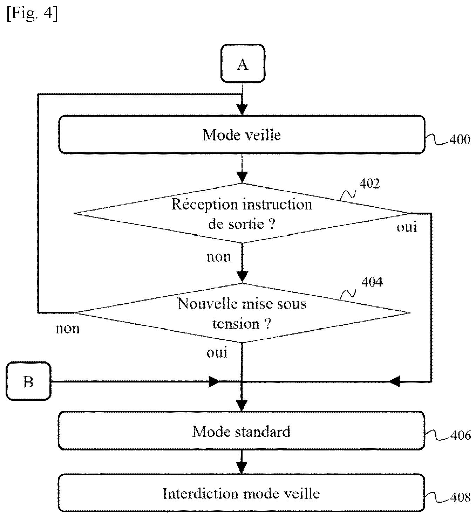

Dans une étape 308 suivante, le contrôleur 200 détermine si le compteur de temps C est supérieur à une durée prédéfinie *Δt.* La durée prédéfinie *Δt* est très supérieure à la périodicité de détection du mode veille et est par exemple comprise entre 24h et 72h. Si c'est le cas, le procédé se poursuit à une étape A, décrite ci-après dans la Fig. 4. Sinon, le contrôleur 200 passe à une étape 310.

A l'étape 310, le contrôleur 200 détermine si des positions d'arrêt sont mémorisées par le contrôleur 200. Une position d'arrêt est une position extrême que l'élément occultant 106 peut atteindre lorsque l'élément occultant 106 monte ou descend. Il existe deux positions d'arrêt : la position basse et la position haute. Si c'est le cas, une étape 312 est effectuée. Sinon, une étape 318 et effectuée.

A l'étape 312, le contrôleur 200 détermine si une instruction est reçue en provenance d'un dispositif de pilotage 120 associé. Si c'est le cas, une étape 314 est effectuée ; sinon, l'étape 318 est effectuée.

A l'étape 314, le contrôleur 200 incrémente la variable *n.* La variable *n* permet ainsi de déterminer le nombre d'instructions reçues par le contrôleur 200 à partir de l'association entre le au moins un dispositif de pilotage 120 et le contrôleur 200.

Dans une étape 316 suivante, le contrôleur 200 détermine si la variable *n* est égale à un nombre prédéfini *N.* Le nombre prédéfini *N* correspond à un nombre maximum d'instructions envoyées après la mémorisation des positions d'arrêt, dans une phase d'assemblage du moteur 103 et du contrôleur 200 à la batterie et à l'élément occultant 106 par exemple, et qui correspond à un nombre de tests effectués pour vérifier le fonctionnement du dispositif d'obturation 100. Le nombre prédéfini *N* est préférentiellement supérieur ou égal à 3 et par exemple égal à 8. Lorsque la variable *n* atteint le nombre prédéfini *N*, le contrôleur 200 considère que le dispositif d'obturation 100 est installé même si le mode veille n'a pas été activé. Une étape B, décrite ci-après dans la Fig. 4, est alors effectuée. Sinon, l'étape 318 est effectuée.

A l'étape 318, le contrôleur 200 détermine si une commande de rotation est appliquée au moteur 103 ou a été appliquée au moteur 103 depuis l'initialisation précédente du compteur de temps C à l'étape 308. Sinon, si aucune commande de rotation n'est appliquée au moteur 103, le contrôleur 200 retourne à l'étape 308.

La Fig. 4 illustre schématiquement des étapes de l'algorithme d'activation et de désactivation du mode veille du contrôleur 200.

A l'étape A, le contrôleur 200 passe à une étape 400. A l'étape B, le contrôleur 200 passe à une étape 408.

A l'étape 400, le contrôleur 200 active le mode veille. Dit autrement, le contrôleur 200 passe du mode standard au mode veille. Le mode standard est donc désactivé.

Ainsi, le contrôleur 200 peut activer le mode veille de manière automatique dès lors qu'aucune instruction ou aucun mouvement du moteur 103 n'est détecté pendant un laps de temps égal à la durée prédéfinie *Δt.* Le contrôleur 200 considère alors que la phase d'assemblage est terminée et que le dispositif d'obturation est dans une phase de stockage et/ou de transport, en attendant la phase d'installation.

Dans une étape 402 suivante, le contrôleur 200 détermine si une instruction de sortie du mode veille est reçue en provenance d'un dispositif de pilotage 120 associé. Chaque trame de l'instruction de sortie comporte un préambule de durée au moins égale à la périodicité de détection du mode veille, permettant d'assurer que l'instruction de sortie soit effectivement reçue par le contrôleur 200 dont le mode veille est activé. Le préambule est suivi d'un champ de données. Ainsi, le contrôleur 200 peut maintenir son interface de communication 214 opérante lorsqu'il détecte un préambule afin de recevoir le champ de données de la trame.

La durée du préambule de l'instruction de sortie est supérieure à la durée du préambule d'une instruction de type usuel, une instruction de type usuel comprenant par exemple des instructions de montée, de descente ou d'arrêt. La durée du préambule d'une instruction de type usuel est de l'ordre de la périodicité de détection du mode standard et est ainsi suffisamment courte pour maintenir une réactivité élevée du contrôleur 200 lorsque le mode standard est activé. Le dispositif de pilotage 120 est donc capable de modifier la durée du préambule d'une trame de manière dynamique selon le type d'instruction émis.

Si une instruction de sortie du mode veille est reçue, une étape 406 est effectuée. Sinon, le contrôleur 200 effectue une étape 404.

A l'étape 404, le contrôleur 200 détermine si le contrôleur 200 est remis sous tension après avoir été éteint. Si c'est le cas, l'étape 406 est effectuée. Sinon, le contrôleur retourne à l'étape 400.

A l'étape 406, le contrôleur 200 désactive le mode veille et réactive le mode standard. Le contrôleur 200 passe ensuite à l'étape 408.

Ainsi, le contrôleur 200 peut aisément et rapidement réactiver le mode standard par réception d'une instruction de sortie du mode veille. Un utilisateur peut alors facilement utiliser le dispositif d'obturation 100 dès l'installation en exécutant une action dédiée à la désactivation du mode veille, et correspondant par exemple à un appui sur une combinaison de touches prédéfinie sur le dispositif de pilotage 120.

En outre, en cas de perte du dispositif de pilotage 120, l'utilisateur peut déconnecter et reconnecter manuellement la batterie afin de réactiver le mode standard. La déconnexion puis reconnexion de la batterie entraîne l'arrêt puis la remise sous tension du moteur 103. Cela permet d'utiliser le dispositif d'obturation 100 malgré l'absence du dispositif de pilotage 120.

A l'étape 408, le contrôleur 200 applique une interdiction d'activation du mode veille, autrement dit bloque l'activation du mode veille. Par exemple, le contrôleur 200 enregistre en mémoire une information représentative de l'interdiction d'activation du mode veille. Cela permet, si le contrôleur 200 est éteint puis remis sous tension de s'assurer que le contrôleur 200 reste à l'étape 408 et ne retourne pas à l'étape 300. Dit autrement, lorsque le contrôleur atteint les étapes 406 et 408, le procédé est terminé et ne peut pas recommencer.

Ainsi, l'activation du mode veille est empêchée après l'installation du dispositif d'obturation 100, ce qui permet d'éviter un dysfonctionnement du dispositif d'obturation 100 lors de son utilisation.

Selon un mode de réalisation, il est toutefois possible d'envoyer une instruction de retour au mode veille par le dispositif de pilotage 120. Par exemple, un utilisateur peut effectuer une combinaison de touches prédéfinie spécifique à l'instruction de retour au mode veille, ladite combinaison étant plus complexe que des combinaisons de touches permettant d'envoyer des instructions usuelles telles que la montée, la descente ou l'arrêt de l'élément occultant 106. L'instruction de retour au mode veille peut être utilisée de manière exceptionnelle dans une phase d'assemblage.

Par ailleurs, lorsque la phase de la phase de stockage et/ou de transport est inférieure à la durée prédéfinie *Δt*, le mode veille n'est pas activé. Des détections de mouvement successives entraînent la réinitialisation du compteur de temps *C*, et la variable *n* atteint le nombre prédéfini *N* avant que le compteur de temps *C* puisse atteindre la durée prédéfinie *Δt.* L'activation du mode veille est alors empêchée. Il est ainsi possible d'éviter l'activation du mode veille entre les phases d'assemblage et d'installation lorsque la phase de stockage et/ou de transport est courte, et notamment inférieure à la durée prédéfinie *Δt.*

## Revendications

1. Procédé d'activation et de désactivation d'un mode veille d'un contrôleur (200) d'un moteur (103), le moteur (103) étant destiné à entraîner en montée et en descente un élément occultant (106), le contrôleur (200) étant configuré pour recevoir des instructions en provenance d'un dispositif de pilotage (120) et pour appliquer des commandes au moteur (103), le contrôleur (200) comportant une interface radio fonctionnant dans deux modes de communication, dits mode standard et mode veille, pouvant être activés alternativement, le contrôleur (200) commandant à l'interface radio, pour chaque mode de communication, une détection périodique de réception d'instructions, le contrôleur et l'interface radio restant au repos entre deux détections lorsqu'aucune instruction n'est reçue, le procédé étant **caractérisé en ce que** la périodicité de détection du mode standard est inférieure à la périodicité de détection du mode veille,
le procédé étant implémenté par le contrôleur et comportant les étapes de :
- Activer (300) le mode standard lors d'une initialisation du contrôleur (200),
- Activer (400) le mode veille si le contrôleur (200) est associé à au moins un dispositif de pilotage (120) et lorsqu'aucune instruction n'est reçue pendant une durée prédéfinie et qu'un nombre d'instructions reçues après un enregistrement de positions extrêmes de l'élément occultant est inférieur à un nombre prédéfini (N), et
- Réactiver (406) le mode standard si une instruction de sortie du mode veille est reçue lorsque le mode veille est activé.

2. Procédé selon la revendication 1, comportant en outre de (406) réactiver le mode standard si le contrôleur est remis sous tension (404) après une extinction lorsque le mode veille est activé.

3. Procédé selon l'une des revendications 1 et 2, comportant en outre de bloquer (408) l'activation du mode veille si le mode standard est réactivé après l'activation du mode veille.

4. Procédé selon l'une des revendications 1 à 3, comportant en outre de bloquer (408) l'activation du mode veille lorsqu'un nombre d'instructions reçues après un enregistrement de positions extrêmes de l'élément occultant atteint (306) le nombre prédéfini (N).

5. Procédé selon l'une des revendications 1 à 4, dans lequel l'instruction de sortie du mode veille comporte une trame comportant un préambule suivi d'un champ de données, le préambule étant d'une durée supérieure à la durée prédéfinie.

6. Procédé d'arrêt d'un mode veille, le procédé étant implémenté par un dispositif de pilotage (120) configuré pour émettre des instructions à un contrôleur (200) d'un moteur (103) destiné à entraîner en montée et en descente un élément occultant (106), les instructions pouvant être des instructions d'un premier type et des instructions d'un second type, le préambule de chaque trame d'une instruction du premier type étant de durée inférieure au préambule de chaque trame d'une instruction du second type, le procédé comportant :
- émettre une instruction du second type lorsque l'instruction est une instruction de sortie du mode de veille, et
- émettre une instruction du premier type sinon.

7. Contrôleur (200) d'un moteur (103) destiné à entraîner en montée et en descente un élément occultant (106), le contrôleur (200) étant configuré pour recevoir des instructions en provenance d'un dispositif de pilotage (120) et pour appliquer des commandes au moteur, le contrôleur (200) comportant une interface radio fonctionnant dans deux modes de communication, dits mode standard et mode veille, pouvant être activés alternativement, le contrôleur commandant à l'interface radio, pour chaque mode de communication, une détection périodique de réception d'instructions, le contrôleur et l'interface radio restant au repos entre deux détections lorsqu'aucune instruction n'est reçue, le contrôleur (200) étant **caractérisé en ce que** la périodicité de détection du mode standard est inférieure à la périodicité de détection du mode veille, et **en ce que** le contrôleur (200) comporte des moyens pour :
- Activer (300) le mode standard lors d'une initialisation du contrôleur,
- Activer (400) le mode veille si le contrôleur (200) est associé à au moins un dispositif de pilotage et lorsqu'aucune instruction n'est reçue pendant une durée prédéfinie et qu'un nombre d'instructions reçues après un enregistrement de positions extrêmes de l'élément occultant est inférieur à un nombre prédéfini (N), et
- Réactiver (406) le mode standard si une instruction de sortie du mode veille est reçue lorsque le mode veille est activé.

8. Système comportant un dispositif d'obturation (100) et le contrôleur selon la revendication 7.

9. Système selon la revendication 8 et comportant en outre un dispositif de pilotage (120) configuré pour émettre des instructions au contrôleur (200) du moteur (103) destiné à entraîner en montée et en descente l'élément occultant (106), le dispositif de pilotage (120) comportant des moyens pour émettre des instructions d'un premier type et des instructions d'un second type, le préambule de chaque trame d'une instruction du premier type étant de durée inférieure au préambule de chaque trame d'une instruction du second type, le dispositif de pilotage comportant des moyens pour :
- émettre une instruction du second type lorsque l'instruction est une instruction de sortie du mode de veille, et
- émettre une instruction du premier type sinon.

10. Produit programme d'ordinateur pouvant être stocké sur un support et/ou téléchargé d'un réseau de communication, afin d'être lu par un processeur, et **caractérisé en ce qu'**il comprend des instructions pour implémenter le procédé selon l'une des revendications 1 à 6, lorsque ledit programme d'ordinateur est exécuté par le processeur.

11. Support de stockage d'informations stockant un programme d'ordinateur comprenant des instructions pour implémenter le procédé selon l'une des revendications 1 à 6 lorsque ledit programme d'ordinateur est lu depuis ledit support de stockage et exécuté par le processeur.
